# FASCICULE DE BREVET EUROPEEN

(11) **EP 1 576 818 B1**
(45) Date de publication et mention de la délivrance du brevet: **02.11.2006**
(21) Numéro de dépôt: 03775679.8
(22) Date de dépôt: 01.12.2003
(51) Int. Cl.: H04N 7/16, H04N 7/167

(54) **PROCEDE DE GESTION DE L'AFFICHAGE DE DESCRIPTIFS D'EVENEMENTS A ACCES CONDITIONNEL**
ANZEIGEVERWALTUNGSVERFAHREN FÜR DARSTELLUNGEN VON EREIGNISSEN MIT BEDINGTEM ZUGANG
METHOD OF MANAGING THE DISPLAY OF EVENT SPECIFICATIONS WITH CONDITIONAL ACCESS

(30) Priorité: 03.12.2002 CH 204402
(43) Date de publication de la demande: 21.09.2005
(73) Titulaire: NagraCard SA, 1033 Cheseaux-sur-Lausanne (CH)
(72) Inventeur: BRIQUE, Olivier, CH-1052 Le Mont-sur-Lausanne (CH); GOGNIAT, Christophe, CH-1022 Chavannes-près-Renens (CH)
(74) Mandataire: Wenger, Joel-Théophile
(86) Numéro de dépôt international: PCT/IB2003/005654
(87) Numéro de publication internationale: WO 2004/052005

(56) Documents cités:
- WO-A-02/15578
- WO-A-97/42762
- GB-A- 2 349 290
- US-A- 5 630 119

## Description

La présente invention concerne un procédé de gestion de l'affichage de descriptifs d'événements à accès conditionnel, en particulier pour la télévision à péage.

Dans les systèmes à accès conditionnel, en particulier dans le domaine de la télévision numérique à péage, un flux de données numériques est transmis vers le téléviseur. Ce flux est chiffré afin de pouvoir en contrôler l'utilisation et de définir des conditions pour une telle utilisation. Ce chiffrement est réalisé grâce à des mots de contrôle (Control Words) qui sont changés à intervalle régulier (typiquement entre 5 et 30 secondes) afin de dissuader toute attaque visant à retrouver un tel mot de contrôle.

Pour que le récepteur puisse déchiffrer le flux chiffré par ces mots de contrôle, ces derniers lui sont envoyés indépendamment du flux dans des messages de contrôle (ECM) chiffrés par une clé propre au système de transmission entre un centre de gestion et un module de sécurité de l'unité d'utilisateur. En effet, les opérations de sécurité sont effectuées dans un module de sécurité (SC) qui est généralement réalisé sous la forme d'une carte à puce, réputée inviolable. Ce module peut être soit de type amovible soit directement intégré au récepteur.

Lors du déchiffrement d'un message de contrôle (ECM), il est vérifié, dans le module de sécurité (SC), que le droit pour accéder au flux considéré est présent. Ce droit peut être géré par des messages d'autorisation (EMM) qui chargent un tel droit dans le module de sécurité. D'autres possibilités sont également envisageables telles que l'envoi de clés de déchiffrement.

Pour la suite de l'exposé, on appellera "événement" un contenu vidéo, audio (par exemple MP3) ou données (programme de jeu par exemple) qui est chiffré selon la méthode connue des mots de contrôle, chaque événement pouvant être chiffré par un ou plusieurs mots de contrôle, chacun ayant une durée de validité déterminée.

La comptabilisation de l'utilisation de tels événements est aujourd'hui basée sur le principe de l'abonnement, de l'achat d'événements ou du paiement par unité de temps.

L'abonnement permet de définir un droit associé à un ou des canaux de diffusion transmettant ces événements et permet à l'utilisateur d'obtenir ces canaux en clair si le droit est présent dans son module de sécurité.

Parallèlement, il est possible de définir des droits propres à un événement, tel qu'un film ou un match de football. L'utilisateur peut acquérir ce droit (achat par exemple) et cet événement sera spécifiquement géré par ce droit. Cette méthode est connue sous l'appellation "pay-per-view" (PPV).

Un message de contrôle (ECM) ne contient pas uniquement le mot de contrôle, mais également les conditions pour que ce mot soit renvoyé au récepteur/décodeur. Lors du déchiffrement des mots de contrôle, il sera vérifié si un droit associé aux conditions d'accès énoncées dans le message est présent dans le module de sécurité.

Le mot de contrôle n'est retourné à l'unité d'utilisateur que lorsque la comparaison est positive. Ce mot de contrôle est contenu dans un message de contrôle ECM qui est chiffré par une clé de transmission.

Pour que le droit soit présent dans le module de sécurité, il est généralement chargé dans ce module par un message d'autorisation (EMM) qui, pour des raisons de sécurité, est généralement chiffré par une clé différente dite clé de droit (RK).

Selon une forme connue de diffusion de télévision à péage, les trois éléments suivants sont nécessaires pour déchiffrer un événement à un moment donné:
- les données relatives à l'événement chiffré par un ou une pluralité de mots de contrôle (CW),
- le ou les messages de contrôle ECM contenant les mots de contrôle (CW) et les conditions d'accès (AC)
- le droit correspondant stocké dans le module de sécurité permettant de vérifier les dites conditions d'accès.

Lorsque l'on souhaite rendre visible à un utilisateur, la liste des canaux ou services ou des événements auxquels il a accès, de même que ceux pour lesquels il peut se procurer les droits, les principes décrits ci-dessus sont également utilisés. Pour ceci, on utilise un guide électronique (EPG = Electronic Program Guide) et l'on affiche, par exemple en vert, les événements ou canaux pour lesquels les droits sont déjà acquis et en rouge ceux pour lesquels les droits ne sont pas acquis.

Lorsque la caractérisation des droits est simple, par exemple lorsque l'utilisateur est abonné à certains services prédéfinis pour une durée de validité déterminée, il est aisé de générer un EPG qui tienne compte de ces droits. Par contre, lorsque l'on souhaite gérer des droits plus complexes, réaliser des offres promotionnelles ou utiliser des conditions qui n'ont pas été prévues dans l'abonnement, les systèmes actuels ne permettent pas de gérer facilement ces éléments.

La demande internationale de brevet WO 97/42762 décrit un système d'accès à des informations, qui peut être utilisé notamment dans le domaine de la télévision à péage. Dans ce système, des messages d'autorisations sont envoyés aux décodeurs des utilisateurs. Ces messages contiennent, de façon conventionnelle, les droits d'accès aux événements de télévision à péage. Ils contiennent en outre des pointeurs qui indiquent un emplacement permettant d'obtenir des informations additionnelles. Ces informations additionnelles peuvent être en particulier des informations en clair concernant les événements eux-mêmes ou des logiciels. Ces informations sont liées au décodeur et sont généralement accessibles sans déchiffrement. Elles ne sont pas contenues dans les messages d'autorisation. Ce système ne permet pas de gérer les aspects de sécurité liés aux données complémentaires et ne permet pas de gérer des conditions d'accès variables en fonction des droits existants pour chaque utilisateur, ces conditions d'accès devant par principe être sécurisées.

La présente invention se propose de pallier les inconvénients des dispositifs de l'art antérieur en réalisant un dispositif dans lequel il est possible de gérer des droits complexes en offrant donc une grande souplesse d'utilisation à un diffuseur.

Ce but est atteint par un procédé de gestion de l'affichage de descriptifs d'événements à accès conditionnel, comportant les étapes suivantes:
- envoi de données formant un guide électronique de programmes (EPG), à un décodeur (STB), ce guide électronique étant destiné à l'affichage des événements qui seront diffusés, ces données comportent, pour chaque événement, au moins un identifiant, des données textuelles et un bloc conditionnel comprenant les conditions requises pour l'accès à cet événement,
- envoi d'au moins un message d'autorisation (EMM) à un module de sécurité (SC) associé au décodeur, ce message définissant des droits d'accès à un événement;
caractérisé en ce que le procédé comporte en outre les étapes suivantes:
- envoi audit module de sécurité (SC), du bloc conditionnel (PECM),
- traitement, dans le module de sécurité, de la condition d'accès contenue dans ledit bloc conditionnel (PECM), et
- renvoi par le module de sécurité d'un message indiquant, en fonction de la condition d'accès pour chaque événement et des droits d'accès contenus dans le module de sécurité, si le droit est présent ou non pour chaque événement dans le module de sécurité,
et en ce que la
condition d'accès contenue dans le bloc conditionnel (PECM) est exprimée sous la forme d'une opération (Op) décrite par une requête en un langage structuré.

La présente invention et ses avantages seront mieux compris en référence à la description d'un mode de réalisation particulier et aux dessins annexés, dans lesquels :
- la figure 1 illustre schématiquement un mode de réalisation d'un guide électronique EPG selon l'art antérieur;
- la figure 2 illustre schématiquement le contenu d'un message de contrôle ECM utilisé dans le mode de réalisation de la figure 1;
- la figure 3 illustre le contenu d'un message de contrôle ECM selon la présente invention;
- la figure 4 illustre le contenu d'un bloc conditionnel utilisé dans le système selon l'invention; et
- la figure 5 représente un mode de réalisation d'un guide électronique EPG selon l'invention.

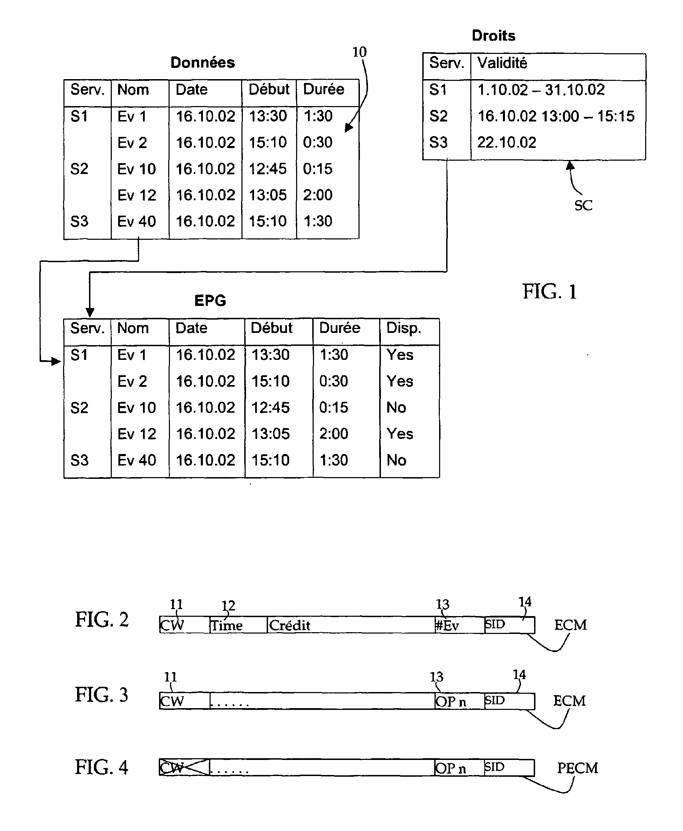

Les figures 1 et 2 décrivent des systèmes connus de l'art antérieur. Dans ces systèmes, les données composant le guide électronique de programme EPG sont transmises par un canal de service et se composent d'informations horaires et textuelles, telles que notamment le titre de l'événement, un descriptif et éventuellement des commentaires. Les données de l'EPG contiennent également le service auquel cet événement est rattaché en terme de droit d'accès, les services étant référencés par exemple de S1 à S48.

Parallèlement, l'événement diffusé est accompagné par les messages de contrôle ECM qui contiennent un certain nombre de champs prédéfinis, portant les références 11 à 14 sur la figure 2, tels que notamment l'identifiant de l'événement (champ 13), le service auquel il est rattaché (champ 14), le mot de contrôle CW (champ 11), l'heure et la date de diffusion (champ 12) et éventuellement, un crédit associé à l'événement. Grâce à cette structure prédéfinie par des champs, la structure du message est définie de telle sorte que par exemple dans le champ 14, l'on va toujours trouver le numéro d'un service SID.

Ce service est initialisé par un message d'autorisation EMM qui a pour but de définir un bloc d'abonnement dans le module de sécurité SC, ce bloc contenant entre autre la durée de validité de ce service.

Pour afficher le guide électronique EPG sur le téléviseur d'un utilisateur, le décodeur STB lit les droits contenus dans le module de sécurité SC c'est-à-dire les blocs définis plus haut. Plus précisément, il détermine, d'après ces droits, la liste des services disponibles ainsi que la durée ou la date de validité de chaque service. Le décodeur dispose donc d'une part d'une base de données provenant du module de sécurité et contenant la liste des services disponibles avec leur durée de validité et d'autre part, d'une base de données destinées à l'EPG, qui contient la liste des événements, le service auquel il est rattaché et la date de diffusion.

Pour chaque événement, le décodeur peut donc vérifier si le module de sécurité dispose du droit pour le service considéré et si ce droit sera valide au moment de la diffusion de l'événement. En fonction de la réponse de cette comparaison, l'événement sera affiché dans l'EPG, par exemple en rouge si le droit n'est pas acquis et en vert si ce droit est acquis et donc présent dans le module de sécurité.

Sur la figure 1, un "Yes" est affiché dans la dernière colonne de l'EPG en regard de l'événement considéré si le droit pour cet événement est acquis et un "No" dans le cas contraire.

Au moment de la diffusion d'un événement, les messages de contrôle ECM, contenant des mots de contrôle CW et associés à cet événement, sont traités dans le module de sécurité de façon à vérifier l'existence de droits associés à cet événement. Si les droits sont présents, chaque message de contrôle ECM est traité de façon à en extraire les mots de contrôle CW qu'il contient. Ce mot de contrôle est alors envoyé au décodeur qui déchiffre alors les données qui ont été chiffrées avec ce mot de contrôle spécifique.

Ce mode de réalisation fonctionne parfaitement lorsque les conditions sont simples, par exemple lorsqu'un utilisateur est abonné à un bouquet de services. Dans ce cas, le décodeur compare le contenu de champs prédéfinis dans les informations composants l'EPG avec le contenu de la mémoire du module de sécurité et obtient une réponse directement exploitable.

Lorsque l'on souhaite proposer des offres promotionnelles notamment, il peut être nécessaire de définir des conditions complexes, pour lesquelles une structure fixe prédéfinie de champs ne se révèle pas adaptée. Un exemple d'une telle offre promotionnelle consiste à permettre un accès libre à un bouquet de canaux, le jour anniversaire de chaque abonné. Avec un système conventionnel, une telle offre peut être proposée, mais au prix d'une grande complexité. En effet, pour permettre ceci, il est nécessaire de créer des droits supplémentaires, plus précisément 365 blocs d'abonnement, correspondant chacun à un jour de l'année. Ces droits sont gérés comme les autres droits, ce qui signifie qu'ils sont transmis par des messages d'autorisation EMM. Ces messages doivent être envoyés de façon répétitive à tous les bénéficiaires, de façon à s'assurer que ceux-ci ont bien reçu les droits.

A la réception de ce message, un nouveau bloc d'abonnement sera créé dans le module de sécurité pour cette seule utilisation. Il est à noter que ces messages vont accaparer de la bande passante et des moyens cryptographiques en particulier du fait que le niveau de chiffrement de ces messages est élevé.

Un autre exemple d'offre promotionnelle consiste à facturer un événement donné selon plusieurs montants différents en fonction du type d'abonnement souscrit. Le titulaire d'un abonnement portant sur des chaînes thématiques sportives peut par exemple payer un match de football à un prix déterminé, alors que les personnes n'ayant pas ce type d'abonnement doivent payer un autre montant pour ce même match. Dans l'état actuel, il n'est pas possible de gérer ce type de règles parce que l'identification de l'événement est rigoureusement identique pour tous les utilisateurs, alors que les conditions d'accès à cet événement dépendent de l'événement et des paramètres propres à un utilisateur.

Aujourd'hui, selon l'état de la technique, la solution consisterait à envoyer un message d'autorisation EMM propre à chaque utilisateur avec le montant de l'événement compte tenu de ses conditions propres. On imagine aisément le nombre de messages à transmettre pour satisfaire tous les utilisateurs.

De façon plus générale, pour pouvoir appliquer des conditions particulières pour un événement particulier, il est nécessaire d'avoir prévu ces conditions par avance dans l'abonnement des utilisateurs concernés. Si tel n'est pas le cas, la gestion des cas particuliers peut se révéler difficile voire impossible. Dans tous les cas, pour générer des droits particuliers sur le module de sécurité, il est nécessaire d'envoyer des messages d'autorisation EMM, à une fréquence suffisante pour s'assurer que la majorité des utilisateurs a bien reçu les droits qui lui sont destinés.

Ce mode de réalisation est peu commode du fait qu'il encombre la mémoire de façon importante et que le trafic des messages d'autorisation EMM utilise inutilement la bande passante disponible.

Dans la figure 3 qui décrit un mode de réalisation de l'invention, le message de contrôle ECM contient non plus une donnée à un emplacement prédéfini, mais une opération Op. Celle-ci est écrite sous forme d'une requête, en utilisant par exemple un langage syntaxique tel que celui connu sous l'acronyme SQL (Structured Query Language).

Le présente invention est particulièrement avantageuse par rapport aux systèmes connus de l'art antérieur par le fait que les conditions définies par des requêtes du type SQL peuvent être imaginées, modifiées ou utilisées de façon très souple, à n'importe quel moment. Le fait de s'affranchir de champs de données prédéfinis dans les messages de contrôle ECM ouvre la voie à des combinaisons auxquelles l'on n'avait pas pensé lors de la mise en route du système et qui n'étaient par conséquent pas prévues dans l'abonnement des utilisateurs.

Cette gestion simplifiée a comme conséquence de permettre de proposer des offres très diversifiées, même pour un groupe de personnes très restreint. Il est donc possible de générer des offres très ciblées collant au plus près les visions marketing de l'entreprise.

Lors du traitement d'un tel message de contrôle ECM, l'opération Op est traitée par le moteur SQL du module de sécurité SC et du résultat dépendra le renvoi ou non du mot de contrôle CW contenu dans ce même message.

De même que pour les messages de contrôle ECM, il est également prévu, dans le cadre de l'invention, de remplacer les champs d'un message d'autorisation EMM par une requête de type SQL.

Les données mémorisées dans le module de sécurité, définissant les blocs d'abonnement, restent inchangées, seules les opérations sur ces données changent.

A titre d'exemple, une requête de ce type pourrait être :
- Service S22 valide ou Date anniversaire = 10 octobre.

Un autre exemple de requête complexe pour un achat impulsif pourrait être :
- Si le module de sécurité contient les droits pour les services S1, S8 et S12, déduire un montant de 4 USD pour l'événement Ev 1, sinon, déduire un montant de 5 USD pour cet événement.

Dans ce mode de réalisation, le décodeur STB n'est pas habilité à traiter une requête complexe en langage SQL, ceci pour des raisons de sécurité prioritairement.

Dans le cadre de cette invention, la solution consiste à modifier des données transmises à l'EPG, cette modification consistant à inclure dans ces données un nouveau bloc qui est une copie partielle du message de contrôle ECM qui sera transmis avec l'événement considéré.

Ce bloc dénommé bloc conditionnel (PECM) va comprendre au moins la même requête SQL que le message de contrôle duquel il est dérivé. Selon l'implémentation choisie, les autres champs tels que le mot de contrôle pourront être supprimés. Il est clair que les messages de contrôle ECM sont transmis au moment où l'événement est visualisé par l'utilisateur, puisqu'ils contiennent les mots de contrôle CW. Par contre, les blocs conditionnels doivent être envoyés à l'avance puisqu'ils sont utilisés pour former l'EPG qui permet à l'utilisateur de visualiser à l'avance, les droits qu'il a déjà acquis et ceux qu'il peut acquérir.

Lors de la réception de ces données par l'EPG, ce bloc PECM sera transmis au module de sécurité, qui lui, est capable de traiter des requêtes complexes, notamment en langage SQL.

Ce bloc PECM est illustré par la figure 4. Le module de sécurité traitera ce bloc conditionnel de façon conventionnelle et pourra en extraire la requête SQL. Les conditions définies dans cette requête sont analysées dans le module de sécurité et le résultat de la requête est retransmis au décodeur STB. Grâce à ce résultat, l'EPG peut être affiché de la façon expliquée précédemment, en référence à la description de l'art antérieur.

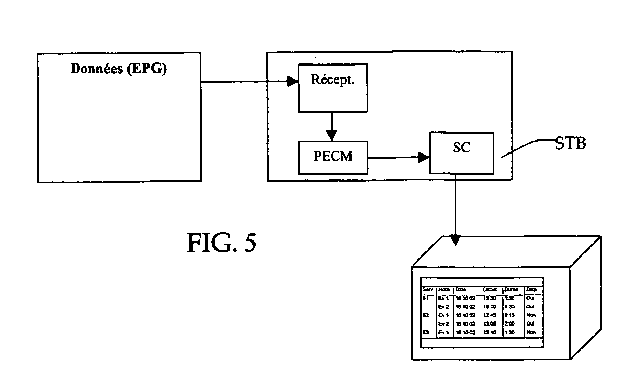

Ce processus est représenté schématiquement par la figure 5. De façon plus détaillée, les données permettant de former l'EPG sont transmises au décodeur STB. Un bloc conditionnel PECM, contenant, sous forme de requête SQL, l'opération qui permet de définir les conditions d'accès, est formé puis transmis au module de sécurité SC. Ce module traite la requête SQL. Les conditions de la requête SQL sont comparées aux droits inscrits dans le module de sécurité, ce qui permet de déterminer pour quels événements, les droits sont acquis ou peuvent être acquis. Ces droits disponibles sont associés aux données de l'EPG. La liste des événements est ensuite affichée sur le téléviseur de l'utilisateur, en distinguant, pour chaque événement si le module de sécurité dispose des droits ou non.

## Revendications

1. Procédé de gestion de l'affichage de descriptifs d'événements à accès conditionnel, comportant les étapes suivantes:
- envoi de données formant un guide électronique de programmes (EPG), à un décodeur (STB), ce guide électronique étant destiné à l'affichage des événements qui seront diffusés, ces données comportent, pour chaque événement, au moins un identifiant, des données textuelles et un bloc conditionnel comprenant les conditions requises pour l'accès à cet événement,
- envoi d'au moins un message d'autorisation (EMM) à un module de sécurité (SC) associé au décodeur, ce message définissant des droits d'accès à un événement;
**caractérisé en ce que** le procédé comporte en outre les étapes suivantes:
- envoi audit module de sécurité (SC), du bloc conditionnel (PECM),
- traitement, dans le module de sécurité, de la condition d'accès contenue dans ledit bloc conditionnel (PECM), et
- renvoi par le module de sécurité d'un message indiquant, en fonction de la condition d'accès pour chaque événement et des droits d'accès contenus dans le module de sécurité, si le droit est présent ou non pour chaque événement dans le module de sécurité,
et **en ce que** la condition d'accès contenue dans le bloc conditionnel (PECM) est exprimée sous la forme d'une opération (Op) décrite par une requête en un langage structuré.

2. Procédé de gestion selon la revendication 1, **caractérisé en ce que** la requête est écrite en langage SQL (Structured Query Language).

3. Procédé de gestion selon la revendication 1, **caractérisé en ce qu'**un événement est chiffré par au moins un mot de contrôle (CW), ces mots de contrôle (CW) sont transmis au décodeur (STB) sous la forme d'un message de contrôle (ECM) chiffré comprenant également les conditions d'accès, ce procédé consistant à transmettre dans le bloc de conditionnel (PECM) tout ou partie du message de contrôle (ECM).

4. Procédé de gestion selon la revendication 3, **caractérisé en ce que** le bloc conditionnel (PECM) comprend uniquement les données relatives aux conditions d'accès contenues dans le message de contrôle (ECM).

5. Procédé de gestion selon la revendication 4, **caractérisé en ce que** lesdites données relatives aux conditions d'accès sont envoyées sous forme chiffrée dans le bloc conditionnel (PECM).

6. Procédé de gestion selon la revendication 4, **caractérisé en ce que** lesdites données relatives aux conditions d'accès sont en clair dans le bloc conditionnel (PECM).

## Claims

1. Method of managing the display of event specifications with conditional access, comprising the following steps:
- sending data forming an electronic program guide (EPG) to a decoder (STB), this electronic guide serving to display the events which will be broadcasted, these data including, for each event, at least one identifier, textual data and a condition block comprising the conditions required for the access to this event,
- sending at least one authorization message (EMM) to a security module (SC) associated with the decoder, this message defining access rights to an event;
**characterized in that** the process furthermore comprises the following steps:
- sending the condition block (PECM) to said security module (SC),
- processing, in the security module, the access condition contained in said condition block (PECM), and
- return by the security module of a message indicating, according to the access condition for each event and to the access rights contained in the security module, if the right exists or not for each event in the security module,
and **in that** the access condition contained in the condition block (PECM) is expressed in the form of an operation (Op) described by a request in a structured language.

2. Management method according to claim 1, **characterized in that** the request is written in SQL language (Structured Query Language).

3. Management method according to claim 1, **characterized in that** an event is encrypted by at least one control word (CW), these control words (CW) are transmitted to the decoder (STB) in the form of an encrypted control message (ECM) also comprising the access conditions, this process consisting in transmitting in the condition block (PECM) all or part of the control message (ECM).

4. Management method according to claim 3, **characterized in that** the condition block (PECM) only includes the data relating to the access conditions contained in the control message (ECM).

5. Management method according to claim 4, **characterized in that** said data related to the access conditions is sent in encrypted form in the condition block (PECM).

6. Management method according to claim 4, **characterized in that** said data related to the access conditions are in clear in the condition block (PECM).

## Patentansprüche

1. Verfahren zur Verwaltung der Anzeige von Beschreibungen von Ereignissen mit bedingtem Zugriff, das die folgenden Schritte umfasst:
- Sendung von Daten, die einen elektronischen Programmführer (EPG) bilden, an einen Decoder (STB), wobei dieser elektronische Führer für die Anzeige von Ereignissen bestimmt ist, die künftig gesendet werden, und diese Daten für jedes Ereignis zumindest eine Kennung, Textdaten sowie einen Bedingungsblock umfassen, der die Bedingungen enthält, die für den Zugriff auf dieses Ereignis verlangt werden,
- Sendung zumindest einer Autorisierungsnachricht (EMM) an einen mit dem Decoder verbundenen Sicherheitsmodul (SC), wobei diese Nachricht die Berechtigungen für den Zugriff auf ein Ereignis definiert,
**dadurch gekennzeichnet, dass** das Verfahren ausserdem die folgenden Schritte umfasst:
- Sendung des Bedingungsblocks (PECM) an den benannten Sicherheitsmodul (SC),
- Verarbeitung der in dem Bedingungsblock (PECM) enthaltenen Zugriffsbedingung im Sicherheitsmodul und
- Rücksendung einer Nachricht durch den Sicherheitsmodul, die in Abhängigkeit von der Zugriffsbedingung für jedes Ereignis und von den im Sicherheitsmodul vorhandenen Zugriffsberechtigungen anzeigt, ob die Berechtigung für jedes Ereignis im Sicherheitsmodul vorliegt oder nicht,
und **dadurch**, dass die im Bedingungsblock (PECM) enthaltene Zugriffsbedingung in Gestalt einer Operation (Op) ausgedrückt ist, die durch eine Anforderung in einer strukturierten Sprache beschrieben wird.

2. Verwaltungsverfahren nach Anspruch 1, **dadurch gekennzeichnet, dass** die Anforderung in SQL- (Structured Query Language) Sprache geschrieben ist.

3. Verwaltungsverfahren nach Anspruch 1, **dadurch gekennzeichnet, dass** ein Ereignis durch zumindest ein Steuerwort (CW) verschlüsselt wird, wobei diese Schlüsselwörter (CW) an den Decoder (STB) in Gestalt einer verschlüsselten Steuernachricht (ECM) übermittelt werden, die auch die Zugriffsbedingungen enthält, und dieses Verfahren darin besteht, im Bedingungsblock (PECM) die Steuernachricht (ECM) ganz oder teilweise zu übermitteln.

4. Verwaltungsverfahren nach Anspruch 3, **dadurch gekennzeichnet, dass** der Bedingungsblock (PECM) lediglich die auf die Zugriffsbedingungen bezogenen Daten umfasst, die in der Steuernachricht (ECM) enthalten sind.

5. Verwaltungsverfahren nach Anspruch 4, **dadurch gekennzeichnet, dass** die benannten, auf die Zugriffsbedingungen bezogenen Daten in verschlüsselter Form im Bedingungsblock (PECM) geschickt werden.

6. Verwaltungsverfahren nach Anspruch 4, **dadurch gekennzeichnet, dass** die benannten, auf die Zugriffsbedingungen bezogenen Daten im Bedingungsblock (PECM) unverschlüsselt vorliegen.
